(19) Europäisches Patentamt / European Patent Office / Office européen des brevets

(11) **EP 3 633 945 B1**

(12) **EUROPEAN PATENT SPECIFICATION**

(45) Date of publication and mention
of the grant of the patent:
**29.05.2024 Bulletin 2024/22**

(21) Application number: **17910656.2**

(22) Date of filing: **22.09.2017**

(51) International Patent Classification (IPC):
***H04L 27/34*** *(2006.01)*

(52) Cooperative Patent Classification (CPC):
**H04L 27/18;** H04L 27/34

(86) International application number:
**PCT/CN2017/102879**

(87) International publication number:
**WO 2018/214355 (29.11.2018 Gazette 2018/48)**

(54) **MODULATION METHOD AND APPARATUS, AND COMPUTER STORAGE MEDIUM**

MODULATIONSVERFAHREN UND -VORRICHTUNG UND COMPUTERSPEICHERMEDIUM

PROCÉDÉ ET APPAREIL DE MODULATION ET SUPPORT DE STOCKAGE INFORMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2017 CN 201710380119**

(43) Date of publication of application:
**08.04.2020 Bulletin 2020/15**

(73) Proprietor: **Sanechips Technology Co., Ltd.
Shenzhen, Guangdong 518055 (CN)**

(72) Inventor: **DOU, Wenchao
Shenzhen P.R.
Guangdong 518055 (CN)**

(74) Representative: **Canzler & Bergmeier
Patentanwälte
Partnerschaft mbB
Despag-Straße 6
85055 Ingolstadt (DE)**

(56) References cited:
CN-A- 1 463 435          CN-A- 102 244 556
US-A1- 2007 230 610      US-A1- 2012 071 104
US-A1- 2015 071 640

**Description**

**TECHNICAL FIELD**

The present invention relates to modulation technologies in the field of communications and, in particular, to a modulation method and apparatus, and a computer storage medium.

**BACKGROUND**

Generally, in a mobile communication system, it is necessary to modulate information in a physical layer to convert the information into a signal appropriate for channel transmission, so as to obtain better anti-interference performance, stronger resistivity to channel losses and better security.

However, in the physical layer, a to-be-modulated data source is generally stored in an 8-bit, 16-bit or 32-bit mode, and the number of bits for storing the data source may be not identical to the number of bits required for modulation. For example, the number of bits for storing the data source is 8, and the number of bits required for 16 quadrature amplitude modulation (QAM), i.e., 16QAM, is 4. It can be seen that the number of bits for storing the data source is not identical to the number of bits required for the modulation. Then, corresponding processing operations need to be performed during the modulation in the physical layer, so that the number of bits for storing the data source after the processing operations can be matched with the number of bits required for the modulation.

In the related art, the modulation in the physical layer is implemented in the following mode: firstly, the data source is divided according to the number of bits required for modulating; then, a table lookup is performed for the divided data source; and finally, a modulation result is outputted. The main problems of this modulation implementation mode are more operations, e.g., shifting operations, required for dividing the data source, slower speed and lower efficiency. To solve the problems of this modulation implementation mode, a modulation implementation mode is proposed in the related art: firstly, modulation parameters are extended according to a format of a data source; then, a modulation parameter of the data source is searched for according to bit data of the data source; and finally, a modulation result is outputted. The main problem of this method is that the extended modulation parameters occupy a large memory space, thereby consuming too many memory resources. Document US2012071104 discloses a transmitter multiplies interference signal component corresponding to interference signal contained in received signal of receiver and subtracts from desired signal. The coefficient used in common to transmitter and receiver is uniquely matched from modulation and channel coding scheme used as modulation parameter determined based on signal to noise power ratio of desired signal.

**SUMMARY**

The invention is defined by the independent claims. Embodiments are defined by the dependent claims.

**BRIEF DESCRIPTION OF DRAWINGS**

FIG. 1 is a flowchart of a modulation method according to an embodiment of the present invention.
FIG. 2 is a schematic diagram illustrating a process of extracting bit data of each first modulation unit in to-be-modulated data and performing a format adjustment on the extracted bit data according to position adjustment information according to an embodiment of the present invention.
FIG. 3 is a schematic diagram illustrating a process of modulating each first modulation unit on higher bits of to-be-modulated data according to modulation information according to an embodiment of the present invention.
FIG. 4 is a schematic diagram illustrating a process of modulating each first modulation unit on lower bits of to-be-modulated data according to modulation information according to an embodiment of the present invention.
FIG. 5 is a structural diagram of a modulation apparatus according to an embodiment of the present invention.
FIG. 6 is a structural diagram of hardware of a modulation apparatus according to an embodiment of the present invention.

**DETAILED DESCRIPTION**

A modulation method provided in an embodiment of the present invention is mainly applied to a mobile communication system for modulating a data source stored in a physical layer. Firstly, first bit data on an odd bit and second bit data on an even bit of each first modulation unit in to-be-modulated data are extracted according to position adjustment information, and a format adjustment is performed on the extracted first bit data and the extracted second bit data, so that the first bit data is separate from the second bit data in each first modulation unit and at least two groups of transition data with a same data length as the to-be-modulated data are obtained, where data on a data bit of each second modulation unit in the transition data is configured to be the first bit data or the second bit data. In this way, each first modulation unit in the to-be-modulated data can be divided without a shifting operation performed on the to-be-modulated data, and the data on the odd bit can be separate from the data on the even bit of each first modulation unit, thereby improving modulation efficiency. Further, a modulation parameter corresponding to each second modulation unit is determined from modulation information according to bit data of each second modulation unit in each group of transition data, and the modulation parameter is allocated to the corresponding position of the second modulation unit. Since the first bit data on the odd bit is separate from the second bit data on the even bit of each first modulation unit in the to-be-modulated data, the separate first bit data and second bit data are scaled, and the modulation parameter is obtained, it is unnecessary to extend the modulation parameter according to a format of the to-be-modulated data, thereby reducing an occupied memory space and memory resource consumption.

Achieved objects, functional features and advantages of the present invention will be further described in conjunction with embodiments with reference to the accompanying drawings. It is to be understood that the embodiments described herein are intended to explain and not to limit the present invention.

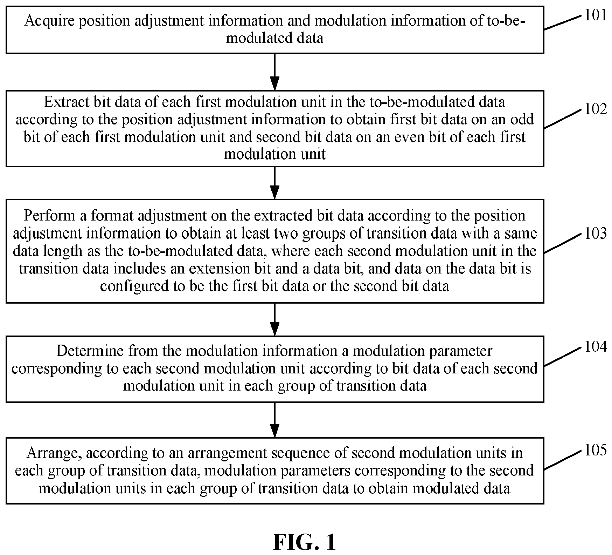

FIG. 1 is a flowchart of a modulation method according to an embodiment of the present invention. Referring to FIG. 1, the modulation method according to the embodiment of the present invention includes steps described below.

In step 101, position adjustment information and modulation information of to-be-modulated data are acquired.

The modulation method in this embodiment is mainly applied to a mobile communication system for modulating a data source stored in a physical layer, so as to improve modulation efficiency of the data source and reduce memory overheads in a modulation process.

Here, a data length of the to-be-modulated data may be set according to practical needs and needs to be specifically set with reference to the number of storage bits of a storage unit in the physical layer of the mobile communication system. For example, in the physical layer, each storage unit in a memory may generally store one word, and a word length may be set according to the practical needs. For an 8-bit processor, the word length is 8 binary bits. For a 16-bit processor, the word length is 16 binary bits. For a 32-bit processor, the word length is 32 binary bits. For a 64-bit processor, the word length is 64 binary bits. Therefore, according to the number of bits of data which is processed each time by the processor in the mobile communication system, the data length of the to-be-modulated data may be 8 bits, 16 bits, 32 bits, 64 bits or the like. In this embodiment, an example where the data length of the to-be-modulated data is 32 bits will be described in detail.

In addition, in order for storage units in the memory to be distinguished, each storage unit has a unique address code; and therefore, a storage unit corresponding to the address code may be acquired through the address code of the to-be-modulated data, so that data stored in the storage unit is acquired. The data is the to-be-modulated data. Further, the to-be-modulated data may be acquired before the position adjustment information and the modulation information are acquired, or may be acquired after the position adjustment information and the modulation information are acquired, so as to be modulated according to the position adjustment information and the modulation information.

It should be noted that a byte is a measurement unit used for measuring a storage capacity and a transmission capacity in computer information technologies, and one byte is equal to 8 binary bits. Therefore, in the embodiment of the present invention, the data length of the to-be-modulated data may include 4 bytes.

Here, position information in the position adjustment information is used for indicating a position of bit data in the to-be-modulated data. The position adjustment information includes multiple position parameters, and each position parameter includes multiple pieces of position information. The number of position parameters and the number of pieces of position information in each position parameter need to be determined and set according to a modulation format and the data length of the to-be-modulated data. For example, when the data length of the to-be-modulated data is 32 bits and the modulation format is 16QAM, the position adjustment information may be: WORD32 QAM16_CFG[32] = {0x00001F1D, 0x00001E1C, 0x00001B19, 0x00001A18, 0x00001715, 0x00001614, 0x00001311, 0x00001210, 0x00000F0D, 0x00000E0C, 0x00000B09, 0x00000A08, 0x00000705, 0x00000604, 0x00000301, 0x00000200}.

WORD32 QAM16_CFG[32] denotes the position adjustment information of the to-be-modulated data with the data length of 32 bits when the modulation format is the 16QAM. Parameters such as 0x00001F1D, 0x00001E1C and 0x00001B19 in WORD32 QAM16_CFG[32] denote the position parameters in the position adjustment information, and 0x in the position parameters denotes that the position parameters are hexadecimal numbers. Since the number of modulation bits required for the 16QAM is 4 bits, each position parameter includes 4 pieces of position information. 4 bits of data are extracted from corresponding positions of the to-be-modulated data according to the 4 pieces of position information to form a second modulation unit. In addition, since two of the 4 pieces of position information in each position parameter correspond to odd bits or even bits of a first modulation unit in the to-be-modulated data and the data length of the to-be-modulated data is 32 bits, the position adjustment information includes 16 position parameters.

It should be noted that the position adjustment information varies with the modulation format. Therefore, before the position adjustment information and the modulation information of the to-be-modulated data are acquired, the position adjustment information of the to-be-modulated data further needs to be determined according to the modulation format. The modulation format may be set according to practical circumstances, and may be binary phase shift keying (BPSK), quadrature phase shift keying (QPSK), 16QAM, 64QAM or 256QAM. An appropriate modulation format is selected according to a communication indicator of the mobile communication system.

In addition, in the mobile communication system, the position adjustment information is generally directly stored in the memory, and therefore, the position adjustment information corresponding to the modulation format may be directly acquired by reading a command.

Here, the modulation information includes multiple modulation parameters, and the number of modulation parameters in the modulation information varies with the modulation format. Specifically, the number of modulation parameters is the same as the number of symbols corresponding to the modulation format. For example, when the modulation format is BPSK, the number of modulation parameters is 2; when the modulation format is QPSK, the number of modulation parameters is 4; and when the modulation format is 16QAM, the number of modulation parameters is 16.

In practical applications, the modulation information may be set according to the practical needs, and needs to be specifically set with reference to a parameter scaling rule. Specifically, before the position adjustment information and the modulation information of the to-be-modulated data are acquired, the parameter scaling rule is determined according to the modulation format and the data length of the to-be-modulated data. The parameter scaling rule is used for scaling a modulation parameter of first bit data on the odd bit or a modulation parameter of second bit data on the even bit of the first modulation unit in the to-be-modulated data. Then the modulation information is determined according to the parameter scaling rule.

For example, when the data length of the to-be-modulated data is 32 bits and the modulation format is the 16QAM, input data for the 16QAM is 4 bits of data which are b0, b1, b2 and b3.

The 4 bits of data are mapped onto a modulation symbol, i.e., x = I + jQ, where I denotes a real part of the modulation symbol, Q denotes an imaginary part of the modulation symbol, and j denotes an imaginary unit. According to a physical-layer protocol in 3GPP TS 36.211, a mapping table of the input data for the 16QAM onto the modulation symbol is shown in table 1.

Table 1

| b3b2b1b0 | I | Q |
|---|---|---|
| 0000 | $1/\sqrt{10}$ | $1/\sqrt{10}$ |
| 0001 | $1/\sqrt{10}$ | $3/\sqrt{10}$ |
| 0010 | $3/\sqrt{10}$ | $1/\sqrt{10}$ |
| 0011 | $3/\sqrt{10}$ | $3/\sqrt{10}$ |
| 0100 | $1/\sqrt{10}$ | $-1/\sqrt{10}$ |
| 0101 | $1/\sqrt{10}$ | $-3/\sqrt{10}$ |
| 0110 | $3/\sqrt{10}$ | $-1/\sqrt{10}$ |
| 0111 | $3/\sqrt{10}$ | $-3/\sqrt{10}$ |
| 1000 | $-1/\sqrt{10}$ | $1/\sqrt{10}$ |
| 1001 | $-1/\sqrt{10}$ | $3/\sqrt{10}$ |
| 1010 | $-3/\sqrt{10}$ | $1/\sqrt{10}$ |
| 1011 | $-3/\sqrt{10}$ | $3/\sqrt{10}$ |

(continued)

| b3b2b1b0 | I | Q |
|----------|---|---|
| 1100 | $-1/\sqrt{10}$ | $-1/\sqrt{10}$ |
| 1101 | $-1/\sqrt{10}$ | $-3/\sqrt{10}$ |
| 1110 | $-3/\sqrt{10}$ | $-1/\sqrt{10}$ |
| 1111 | $-3/\sqrt{10}$ | $-3/\sqrt{10}$ |

Referring to the above table 1, the input data for the 16QAM is mapped onto 16 modulation symbols, and each modulation symbol includes I-path data and Q-path data. Data b1 and b3 on the odd bits of the input data may correspond to I path, and data b0 and b2 on the even bits of the input data may correspond to Q path. As can be obtained from table 1, a correspondence between the data on the odd bits of the input data for the 16QAM and the I-path data of the modulation symbol, or a correspondence between the data on the even bits of the input data for the 16QAM and the Q-path data of the modulation symbol is shown in table 2.

Table 2

| Data on odd bits (or even bits) of the input data | I-path data (or Q-path data) of the modulation symbol |
|----------|----------|
| 00 | $1/\sqrt{10}$ |
| 01 | $3/\sqrt{10}$ |
| 10 | $-1/\sqrt{10}$ |
| 11 | $-3/\sqrt{10}$ |

In some embodiments, since the data length of the to-be-modulated data is 32 bits, the data on the odd bits or the data on the even bits of the input data for the 16QAM is scaled as the modulation parameter with a data length of 16 bits, and finally the modulation parameters of the data on the odd bits and the data on the even bits of the input data are combined into a 32-bit binary data to obtain modulated data of the input data.For example, the parameter scaling rule may include 1 bit of integer, 14 bits of decimals and 1 bit of flag bit. After scaling, the correspondence between the data on the odd bits or the data on the even bits of the input data for the 16QAM and the modulation parameter may be shown in table 3.

Table 3

| Data positioned on odd bits or data positioned on even bits (b0b2 or b1b3) of input data | Modulation parameter (hexadecimal) |
|----------|----------|
| 00 | 14D1 |
| 01 | 3C76 |
| 10 | EB68 |
| 11 | C467 |

Here, according to the above table 3, the modulation information of the to-be-modulated data may be obtained as follows:
WORD16 QAM16[16] = {0x14D1, 0x3C76, 0xEB68, 0xC467, 0x14D1, 0x3C76, 0xEB68, 0xC467, 0x14D1, 0x3C76, 0xEB68, 0xC467, 0x14D1, 0x3C76, 0xEB68, 0xC467}.
WORD16 QAM16[16] denotes the modulation information of the to-be-modulated data with the data length of 32 bits when the modulation format is the 16QAM. Parameters such as 0x14D1, 0x3C76 and 0xEB68 denote the modulation parameters in the modulation information, and 0x in the modulation parameters denotes that the modulation parameters are hexadecimal numbers. The modulation information includes 16 modulation parameters. The modulation parameter corresponds to the bit data of the second modulation unit and only relates to data on lower bits of the second modulation unit. The data on the lower bits is the data on the odd bits or the data on the even bits of the input data for the 16QAM. For example, when the bit data of the second modulation unit is 0000, the modulation parameter is 0x14D1; when the bit data of the second modulation unit is 0001, the modulation parameter is 0x3C76; when the bit data of the second modulation unit is 0010, the modulation parameter is 0xEB68; when the bit data of the second modulation unit is 0011, the modulation parameter is 0xC467; when the bit data of the second modulation unit is 0100, the modulation parameter is 0x14D1; when the bit data of the second modulation unit is 0101, the modulation parameter is 0x3C76; when the bit data of the second modulation unit is 0110, the modulation parameter is 0xEB68; and when the bit data of the second modulation unit is 0111, the modulation parameter is 0xC467.

In addition, in the mobile communication system, the modulation information is generally directly stored in the memory, and therefore, the modulation information corresponding to the modulation format may be directly acquired by reading the command.

It should be noted that the first modulation unit in the following embodiments refers to a processing unit configured according to the number of bits required for the modulation of the to-be-modulated data. For example, if the to-be-modulated data with the data length of 32 bits is modulated by using the modulation format, the 16QAM which requires 4 bits, 4 consecutive bits of the to-be-modulated data may form one first modulation unit according to an arrangement sequence from a higher bit to a lower bit or an arrangement sequence from the low bit to the higher bit of the to-be-modulated data, and the to-be-modulated data has 8 first modulation units in total. For example, bit 31, bit 30, bit 29 and bit 28 of the to-be-modulated data form the 1st first modulation unit, and bit 27, bit 26, bit 25 and bit 24 of the to-be-modulated data form the 2nd first modulation unit, and so on.

The second modulation unit refers to a modulation unit obtained by extending the first bit data on the odd bit of the first modulation unit or the second bit data on the even bit of the first modulation unit. The number of bits of the bit data of the second modulation unit is the same as the number of bits of the bit data of the first modulation unit. For example, if the first modulation unit is a processing unit composed of bits 31, 30, 29 and 28 of the to-be-modulated data, the first modulation unit is extended into two second modulation units, that is, one second modulation unit composed of two extension bits, bit 31 and bit 29, and the other second modulation unit composed of two extension bits, bit 30 and bit 28. The extension bit is not particularly limited in the present invention, and bit data on the extension bit may be 0 or 1. In the following embodiment, an example where the extension bit is bit 0 of the to-be-modulated data will be described in detail.

In step 102, bit data of each first modulation unit in the to-be-modulated data is extracted according to the position adjustment information to obtain the first bit data on the odd bit and the second bit data on the even bit of each first modulation unit.

Here, the bit data is extracted from corresponding positions of the to-be-modulated data according to the position information in each position parameter in the position adjustment information. For example, position parameter 0x00001F1D includes 4 pieces of position information, where 0000 on the higher bits includes 2 pieces of position information both indicating the position of bit 0 of the to-be-modulated data, 1F on the lower bits indicates the position of bit 31 of the to-be-modulated data, and 1D on the lower bits indicates the position of bit 29 of the to-be-modulated data. According to position parameter 0x00001F1D, the first bit data on the odd bits of the first modulation unit and bit data on bit 0 in the to-be-modulated data may be extracted. Position parameter 0x00001E1C also includes 4 pieces of position information, where 0000 on the higher bits includes 2 pieces of position information both indicating the position of bit 0 of the to-be-modulated data, 1E on the lower bits indicates the position of bit 30 of the to-be-modulated data, and 1C on the lower bits indicates the position of bit 28 of the to-be-modulated data. According to position parameter 0x00001E1C, the second bit data on the even bits of the first modulation unit and the bit data on bit 0 in the to-be-modulated data may be extracted. For other position parameters in the position adjustment information, the manner for extracting the bit data is similar and will not be repeated here.

It should be noted that when the modulation format is the QPSK, both the first bit data and the second bit data are 1 bit; when the modulation format is the 16QAM, both the first bit data and the second bit data are 2 bits; when the modulation format is the 64QAM, both the first bit data and the second bit data are 3 bits; and when the modulation format is the 256QAM, both the first bit data and the second bit data are 4 bits.

In step 103, a format adjustment is performed on the extracted bit data according to the position adjustment information to obtain at least two groups of transition data with a same data length as the to-be-modulated data, where each second modulation unit in the transition data includes an extension bit and a data bit, and data on the data bit is configured to be the first bit data or the second bit data.

Here, the format adjustment may be performed on the extracted bit data according to an arrangement sequence of the position parameters in the position adjustment information to obtain at least two groups of transition data with the same data length as the to-be-modulated data. The first bit data and the second bit data in the transition data may be arranged according to a preset rule. For example, the first bit data and the second bit data in the transition data may be alternately arranged. In addition, a position arrangement sequence of the first bit data in the transition data may be identical to a position arrangement sequence of the first bit data in the to-be-modulated data and a position arrangement sequence of the second bit data in the transition data may be identical to a position arrangement sequence of the second bit data in the to-be-modulated data; alternatively, the position arrangement sequence of the first bit data in the transition data may be reverse to the position arrangement sequence of the first bit data in the to-be-modulated data, and the position arrangement sequence of the second bit data in the transition data may be reverse to the position arrangement sequence of the second bit data in the to-be-modulated data.

Here, two groups of transition data with the same data length as the to-be-modulated data may be obtained, three groups of transition data with the same data length as the to-be-modulated may be obtained, or more groups of transition data with the same data length as the to-be-modulated data may be obtained. For example, if the to-be-modulated data with the data length of 32 bits is modulated by using the 16QAM, 4 groups of transition data with the same data length as the to-be-modulated data may be obtained, and the number of second modulation units in each group of transition data is 4. Accordingly, in a subsequent storage process, only modulation parameters of the second modulation units in each group of transition data are stored to obtain modulated data of the to-be-modulated data.

It should be noted that in the transition data, the extension bit may be located on a higher bit of the second modulation unit, and correspondingly, the data bit may be located on a lower bit of the second modulation unit. For example, if the bit data of the second modulation unit is 0011, 00 is bit data on higher bits, i.e., extension bits, of the second modulation unit and 11 is bit data on lower bits, i.e. data bits, of the second modulation unit.

In step 104, a modulation parameter corresponding to each second modulation unit is determined from the modulation information according to bit data of each second modulation unit in each group of transition data.

Here, each group of transition data may include multiple second modulation units, and the modulation parameter corresponding to each second modulation unit is determined from the modulation information according to the bit data of each second modulation unit in each group of transition data. For example, when the bit data of the second modulation unit is 0101, the modulation parameter corresponding to the second modulation unit is determined to be 0x3C76 from the modulation information.

In step 105, modulation parameters corresponding to the second modulation units in each group of transition data are arranged according to an arrangement sequence of the second modulation units in each group of transition data to obtain the modulated data.

Here, it is necessary to arrange the modulation parameters corresponding to the second modulation units in each group of transition data according to the arrangement sequence of the second modulation units in each group of transition data to obtain the modulated data, so as to sequentially store the modulated data according to an arrangement sequence of the first modulation units in the to-be-modulated data, and thereby implement the modulation of the to-be-modulated data. For example, when the second modulation unit is at position P0 of the transition data, the modulation parameter of the second modulation unit needs to be arranged at a position corresponding to P0.

In some embodiments, the modulation parameters corresponding to the second modulation units in each group of transition data are stored, so that the modulation of the to-be-modulated data is completed.

Finally, in the practical application, another to-be-modulated data further needs to be cyclically acquired until all to-be-modulated data sources in the physical layer are modulated.

It can be understood that the modulation efficiency can be improved and the memory overheads can be reduced according to the position adjustment information and the modulation information of the to-be-modulated data for two reasons. On one hand, each position parameter in the position adjustment information includes the first bit data on the odd bit or the second bit data on the even bit of the first modulation unit in the to-be-modulated data, so the first bit data on the odd bit and the second bit data on the even bit of each first modulation unit in the to-be-modulated data may be extracted according to the position adjustment information, and the format adjustment is performed on the extracted first bit data and the extracted second bit data, so that the first bit data is separate from the second bit data in each first modulation unit and at least two groups of transition data with the same data length as the to-be-modulated data are obtained, where the data on the data bit of each second modulation unit in the transition data is configured to be the first bit data or the second bit data. In this way, the first bit data on the odd bit and the second bit data on the even bit of the first modulation unit in the to-be-modulated data can be obtained without a shifting operation performed on the to-be-modulated data, thereby improving the modulation efficiency. On the other hand, the modulation information includes the modulation parameter which corresponds to the second modulation unit and is obtained by extending the first bit data or the second bit data, the modulation parameter corresponding to the second modulation unit can be determined from the modulation information according to the bit data of the second modulation unit, and the modulation parameter can be allocated to the corresponding position of the second modulation unit, so that the modulated data can be obtained. Since the first bit data on the odd bit is separate from the second bit data on the even bit of each first modulation unit in the to-be-modulated data, the separate first bit data and second bit data are scaled, and the modulation parameter is obtained, it is unnecessary to extend the modulation parameter according to a format of the to-be-modulated data, thereby reducing an occupied memory space and memory resource consumption.

In order to have a clearer understanding of a modulation process of the to-be-modulated data, an example where the to-be-modulated data with the data length of 32 bits is modulated by using the 16QAM will be described in detail in an application embodiment of the modulation method of the present invention.

Firstly, the position adjustment information and the modulation information of the to-be-modulated data are acquired by reading the command. The position adjustment information is: WORD32 QAM16_CFG[32] = {0x00001F1D, 0x00001E1C, 0x00001B19, 0x00001A18, 0x00001715, 0x00001614, 0x00001311, 0x00001210, 0x00000F0D, 0x00000E0C, 0x00000B09, 0x00000A08, 0x00000705, 0x00000604, 0x00000301, 0x00000200}.

The modulation information is: WORD16 QAM16[16] = {0x14D1, 0x3C76, 0xEB68, 0xC467, 0x14D1, 0x3C76, 0xEB68, 0xC467, 0x14D1, 0x3C76, 0xEB68, 0xC467, 0x14D1, 0x3C76, 0xEB68, 0xC467}.

Then, the to-be-modulated data is read. The to-be-modulated data is 11010001011100001110010101011000.

Finally, the to-be-modulated data is modulated according to the position adjustment information and the modulation information of the to-be-modulated data.

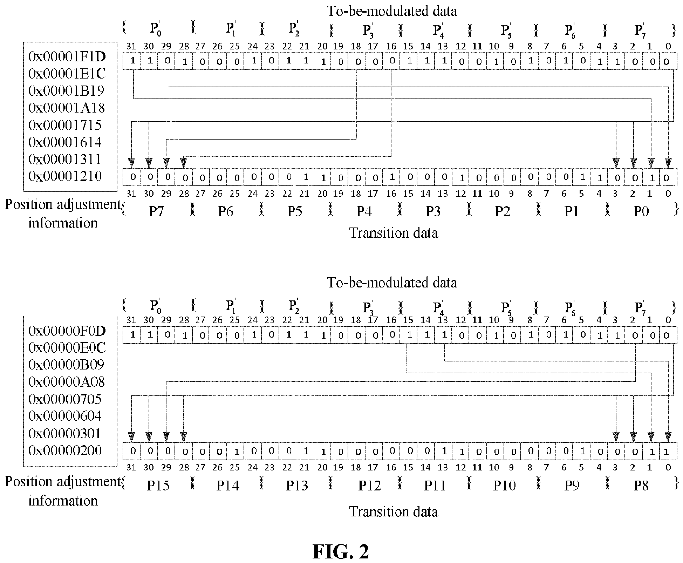

Specifically, FIG. 2 is a schematic diagram illustrating a process of extracting the bit data of each first modulation unit in the to-be-modulated data and performing the format adjustment on the extracted bit data according to the position adjustment information. Referring to FIG. 2, the to-be-modulated data includes 8 first modulation units, $P_0'$ to $P_7'$. Firstly, bit data corresponding to the position information in each position parameter is extracted from the to-be-modulated data according to each position parameter in the position adjustment information, and the first bit data on the odd bits and the second bit data on the even bits of each first modulation unit are obtained. For example, according to position parameter 0x00001F1D, 2 bits of data on bit 0, 1 bit of data on bit 31 and 1 bit of data on bit 29, that is, 4 bits of data in total, are extracted from the to-be-modulated data. The 4 bits of data are arranged according to an arrangement sequence of the position information in the position parameter, and the arranged 4 bits of data form the first second modulation unit including the first bit data in the transition data. The bit data of this second modulation unit is 0010, and the first bit data is 10. According to position parameter 0x00001E1C, 2 bits of data on bit 0, 1 bit of data on bit 30 and 1 bit of data on bit 28, that is, 4 bits of data in total, are extracted from the to-be-modulated data. The 4 bits of data are arranged according to an arrangement sequence of the position information in the position parameter, and the arranged 4 bits of data forms the first second modulation unit including the second bit data in the transition data. The bit data of this second modulation unit is 0011, and the second bit data is 11.

Then, the format adjustment is performed on the extracted bit data according to the arrangement sequence of the position parameters in the position adjustment information, to obtain at least two groups of transition data with the data length of 32 bits. The position arrangement sequence of the first bit data in the transition data is reverse to the position arrangement sequence of the first bit data in the to-be-modulated data, and the position arrangement sequence of the second bit data in the transition data is reverse to the position arrangement sequence of the second bit data in the to-be-modulated data. For example, the bit data of the first modulation unit in the to-be-modulated data is divided into two paths to be adjusted, and the two paths are processed in parallel.

The first path adjusts the bit data of first modulation units on higher bits of the to-be-modulated data, and the second path adjusts the bit data of first modulation units on lower bits of the to-be-modulated data. Referring to FIG. 2, the first path is to adjust first modulation units on bit 31 to bit 16 of the to-be-modulated data, and the format adjustment is performed on the extracted bit data on the higher bits of the to-be-modulated data according to an arrangement sequence of position parameters corresponding to the higher bits of the to-be-modulated in the position adjustment information. For example, for position parameter 0x00001F1D and position parameter 0x00001E1C, since 0x00001F1D is arranged before 0x00001E1C, the second modulation unit corresponding to position information of 0x00001F1D in the transition data is arranged at position P0, and the second modulation unit corresponding to position information of 0x00001E1C in the transition data is arranged at position P1. The second path is to adjust first modulation units on bit 15 bit to bit 0 of the to-be-modulated data, and the format adjustment is performed on the extracted bit data on the lower bits of the to-be-modulated data according to an arrangement sequence of position parameters corresponding to the lower bits of the to-be-modulated data in the position adjustment information. For example, for position parameter 0x00000F0D and position parameter 0x00000E0C, since 0x00000F0D is arranged before 0x00000E0C, the second modulation unit corresponding to position information of 0x00000F0D in the transition data is arranged at position P8, and the second modulation unit corresponding to position information of 0x00000E0C in the transition data is arranged at position P9.

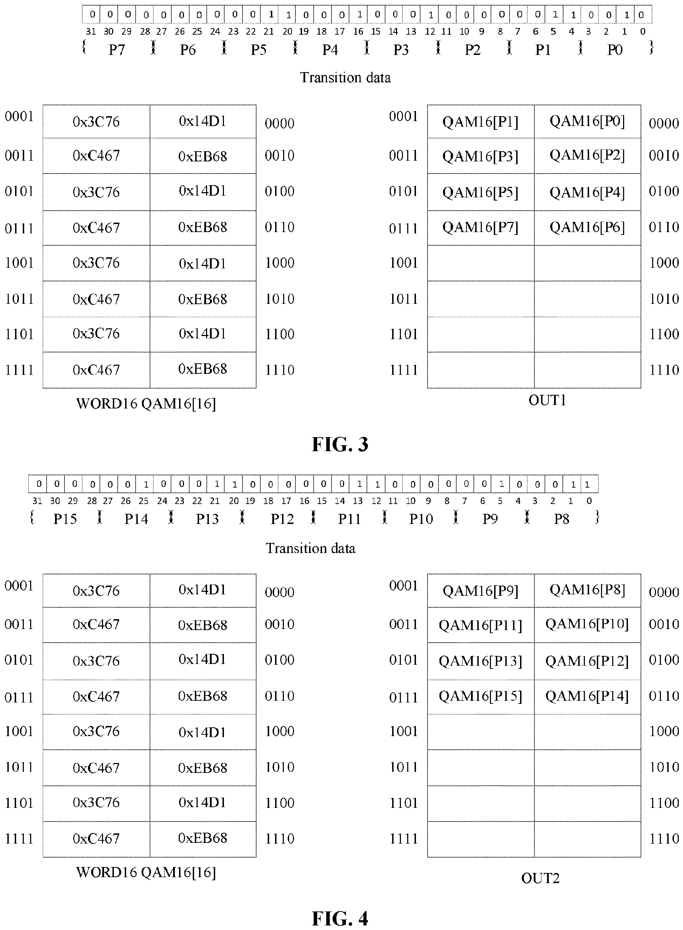

FIG. 3 is a schematic diagram illustrating a process of modulating each first modulation unit on the higher bits of the to-be-modulated data according to the modulation information. Referring to FIG. 3, a modulation parameter corresponding to each second modulation unit is determined from the modulation information according to bit data of each second modulation unit in this group of transition data, and modulation parameters corresponding to second modulation units in this group of transition data are arranged according to an arrangement sequence of the second modulation units in this group of transition data to obtain modulated data. For example, for second modulation unit P0 whose bit data is 0010, a modulation parameter corresponding to the bit data 0010 of this second modulation unit is determined to be 0xEB68 from the modulation information; and after the modulation parameter of this second modulation unit is determined, the modulation parameter is allocated to the corresponding position of P0, that is, the corresponding position of 0000 in OUT1. After each modulation parameter is allocated to the corresponding position of the second modulation unit, the modulated data for the first modulation units on the higher bits of the to-be-modulated data is obtained, as shown in table 4.

Table 4

| QAM[P1]=0xC467 | QAM[P0]=0xEB68 |
|---|---|
| QAM[P3]=0x3C76 | QAM[P2]=0x14D1 |
| QAM[P5]=0xC467 | QAM[P4]=0x3C76 |
| QAM[P7]=0x14D1 | QAM[P6]=0x14D1 |

The modulated data for the first modulation units on the higher bits of the to-be-modulated data is stored.

FIG. 4 is a schematic diagram illustrating a process of modulating each first modulation unit on the lower bits of the to-be-modulated data according to the modulation information. Referring to FIG. 4, a modulation parameter corresponding to each second modulation unit is determined from the modulation information according to bit data of each second modulation unit in this group of transition data, and modulation parameters corresponding to second modulation units in this group of transition data are arranged according to an arrangement sequence of the second modulation units in this group of transition data to obtain so that modulated data. For example, for second modulation unit P8 whose bit data is 0011, a modulation parameter corresponding to the bit data 0011 of this second modulation unit is determined to be 0xC467 from the modulation information; and after the modulation parameter of this second modulation unit is determined, the modulation parameter is allocated to the corresponding position of P8, that is, the corresponding position of 0000 in OUT2. After each modulation parameter is allocated to the corresponding position of the second modulation unit, the modulated data for the first modulation units on the lower bits of the to-be-modulated data is obtained, as shown in table 5.

Table 5

| QAM[P9]=0xEB68 | QAM[P8]=0xC467 |
|---|---|
| QAM[P11]=0xC467 | QAM[P10]=0x14D1 |
| QAM[P13]=0xC467 | QAM[P12]=0x14D1 |
| QAM[P15]=0x14D1 | QAM[P14]=0xEB68 |

The modulated data for the first modulation units on the lower bits of the to-be-modulated data is stored.

The modulated data for the first modulation unit on the higher bits of the to-be-modulated data and the modulated data for the first modulation unit on the lower bits of the to-be-modulated data are combined. That is, the modulated data for the first modulation units on the lower bits of the to-be-modulated data is stored after the modulated data for the first modulation units on the higher bits of the to-be-modulated data. Finally, the modulated data of the to-be-modulated data is obtained.

In another embodiment of the modulation method of the present invention, a practical application of the modulation method of the present invention will be described in detail.

The modulation method according to the embodiment of the present invention may be implemented by using CEVA software. The CEVA software is based on a vector operation unit and performs parallel modulation processing on each first modulation unit in the to-be-modulated data by using adjustment instructions, thereby improving the modulation efficiency.

Specifically, the position adjustment information of the to-be-modulated data is read according to the modulation format, and the modulation information corresponding to the modulation format is read.

The to-be-modulated data is read, the first bit data on the odd bit and the second bit data on the even bit of each first modulation unit in the to-be-modulated data are extracted according to the position adjustment information by using a bit-adjustment instruction vbpermute, and the format adjustment is performed on the extracted bit data to obtain at least two groups of transition data with the same data length as the to-be-modulated data.

The modulation parameter of each second modulation unit in each group of transition data is determined from the modulation information by using an adjustment instruction vpermute2w, and the modulation parameters corresponding to the second modulation units in each group of transition data are arranged according to the arrangement sequence of the second modulation units in each group of transition data, so that the modulation of the to-be-modulated data is completed and the modulated data is obtained.

The modulation data is stored. After the all to-be-modulated data sources in the physical layer are modulated, the modulation process exits.

A modulation apparatus is further provided according to an embodiment of the present invention. The apparatus is configured to implement specific details of the modulation method of the present invention, thereby achieving same effects.

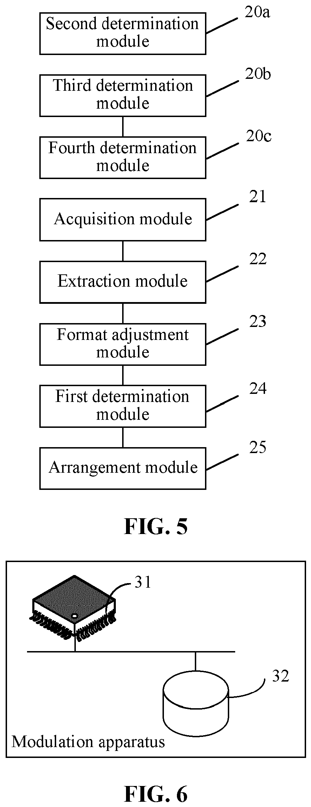

FIG. 5 is a structural diagram of a modulation apparatus according to an embodiment of the present invention. Referring to FIG. 5, the modulation apparatus in this embodiment includes an acquisition module 21, an extraction module 22, a format adjustment module 23, a first determination module 24 and an arrangement module 25.

The acquisition module 21 is configured to acquire position adjustment information and modulation information of to-be-modulated data.

The extraction module 22 is configured to extract bit data of each first modulation unit in the to-be-modulated data according to the position adjustment information to obtain first bit data on an odd bit of each first modulation unit and second bit data on an even bit of each first modulation unit.

The format adjustment module 23 is configured to perform a format adjustment on the extracted bit data according to the position adjustment information to obtain at least two groups of transition data with a same data length as the to-be-modulated data, where each second modulation unit in the transition data includes an extension bit and a data bit, and data on the data bit is configured to be the first bit data or the second bit data.

The first determination module 24 is configured to determine from the modulation information a modulation parameter corresponding to each second modulation unit according to bit data of each second modulation unit in each group of transition data.

The arrangement module 25 is configured to arrange, according to an arrangement sequence of second modulation units in each group of transition data, modulation parameters corresponding to the second modulation units in each group of transition data to obtain modulated data.

In some embodiments, a position arrangement sequence of the first bit data in the transition data is identical to a position arrangement sequence of the first bit data in the to-be-modulated data, and a position arrangement sequence of the second bit data in the transition data is identical to a position arrangement sequence of the second bit data in the to-be-modulated data.

Alternatively, the position arrangement sequence of the first bit data in the transition data is reverse to the position arrangement sequence of the first bit data in the to-be-modulated data, and the position arrangement sequence of the second bit data in the transition data is reverse to the position arrangement sequence of the second bit data in the to-be-modulated data.

In some embodiments, in the transition data, the extension bit is located on a higher bit of the second modulation unit, and the data bit is located on a lower bit of the second modulation unit.

In some embodiments, the modulation apparatus may further include a second determination module 20a, which is configured to determine the position adjustment information of the to-be-modulated data according to a present modulation format.

In some embodiments, the modulation apparatus may further include a third determination module 20b and a fourth determination module 20c.

The third determination module 20b is configured to determine a parameter scaling rule according to the preset modulation format and a data length of the to-be-modulated data. The parameter scaling rule is used for scaling the modulation parameter of the data bit in the second modulation unit.

The fourth determination module 20c is configured to determine the modulation information according to the parameter scaling rule.

In a practical application, the acquisition module 21, the extraction module 22, the format adjustment module 23, the first determination module 24, the arrangement module 25, the second determination module 20a, the third determination module 20b and the fourth determination module 20c may all be implemented by a processor, such as a central processing unit (CPU), a micro processor unit (MPU), a digital signal processor (DSP) or a field programmable gate array (FPGA), in the modulation apparatus (which may be an encoder in the practical application).

On the basis of the above-mentioned method and the hardware implementation of the apparatus shown in FIG. 5, a modulation apparatus is further provided according to an embodiment of the present invention. FIG. 6 is a structural diagram of hardware of a modulation apparatus according to an embodiment of the present invention. Referring to FIG. 6, the modulation apparatus includes a processor 31 and a memory 32 connected to the processor 31 through a communication bus.

The memory 32 is configured to store computer programs (specifically, modulation programs).

The processor 31 is configured to execute the computer programs to perform steps described below.

Position adjustment information and modulation information of to-be-modulated data are acquired.

Bit data of each first modulation unit in the to-be-modulated data is extracted according to the position adjustment information to obtain first bit data on an odd bit of each first modulation unit and second bit data on an even bit of each first modulation unit.

A format adjustment is performed on the extracted bit data according to the position adjustment information to obtain at least two groups of transition data with a same data length as the to-be-modulated data. Each second modulation unit in the transition data includes an extension bit and a data bit, and data on the data bit is configured to be the first bit data or the second bit data.

A modulation parameter corresponding to each second modulation unit is determined from the modulation information according to bit data of each second modulation unit in each group of transition data.

Modulation parameters corresponding to second modulation units in each group of transition data are arranged according to an arrangement sequence of the second modulation units in each group of transition data to obtain modulated data.

In some embodiments, a position arrangement sequence of the first bit data in the transition data is identical to a position arrangement sequence of the first bit data in the to-be-modulated data, and a position arrangement sequence of the second bit data in the transition data is identical to a position arrangement sequence of the second bit data in the to-be-modulated data.

Alternatively, the position arrangement sequence of the first bit data in the transition data is reverse to the position arrangement sequence of the first bit data in the to-be-modulated data, and the position arrangement sequence of the second bit data in the transition data is reverse to the position arrangement sequence of the second bit data in the to-be-modulated data.

In some embodiments, in the transition data, the extension bit is located on a higher bit of the second modulation unit, and the data bit is located on a lower bit of the second modulation unit.

In some embodiments, the processor 31 is further configured to execute the computer programs to perform a step described below.

Before the position adjustment information and the modulation information of the to-be-modulated data are acquired, the position adjustment information of the to-be-modulated data is determined according to a preset modulation format.

In some embodiments, the processor 31 is further configured to execute, before the position adjustment information and the modulation information of the to-be-modulated data are acquired, the computer programs to perform steps described below.

Before the position adjustment information and the modulation information of the to-be-modulated data are acquired, a parameter scaling rule is determined according to the preset modulation format and a data length of the to-be-modulated data. The parameter scaling rule is used for scaling the modulation parameter of the data bit in the second modulation unit.

The modulation information is determined according to the parameter scaling rule.

A computer storage medium is further provided according to an embodiment of the present invention. The storage medium is configured to store computer-executable instructions for executing the above-mentioned modulation method. In a practical application, the computer storage medium is a computer-readable storage medium. The computer-readable storage medium may be a ferroelectric random access memory (FRAM), a read-only memory (ROM), a programmable read-only memory (PROM), an erasable programmable read-only memory (EPROM), an electrically-erasable programmable read-only memory (EEPROM), a flash memory, a magnetic surface memory, a compact disc, a compact disc-read only memory (CD-ROM) or other memories.

The above are merely preferred embodiments of the present invention and are not intended to limit the scope of the present invention.

## INDUSTRIAL APPLICABILITY

According to the solutions provided by the embodiments of the present invention, the first bit data on the odd bit and the second bit data on the even bit of each first modulation unit in the to-be-modulated data are extracted according to the position adjustment information, and the format adjustment is performed on the extracted first bit data and the extracted second bit data, so that the first bit data is separate from the second bit data in each first modulation unit and at least two groups of transition data with the same data length as the to-be-modulated data are obtained, where the data on the data bit of each second modulation unit in the transition data is configured to be the first bit data or the second bit data. In this way, each first modulation unit in the to-be-modulated data can be divided without a shifting operation performed on the to-be-modulated data, and the data on the odd bit can be separate from the data on the even bit of each first modulation unit, thereby improving the modulation efficiency. Further, the modulation parameter corresponding to each second modulation unit is determined from the modulation information according to the bit data of each second modulation unit in each group of transition data, and the modulation parameter is allocated to the corresponding position of the second modulation unit. Since the first bit data on the odd bit is separate from the second bit data on the even bit of each first modulation unit in the to-be-modulated data, the separate first bit data and second bit data are scaled, and the modulation parameter is obtained, it is unnecessary to extend the modulation parameter according to the format of the to-be-modulated data, thereby reducing the occupied memory space and the memory resource consumption.

**Claims**

1. A modulation method, comprising:

   acquiring position adjustment information and modulation information of to-be-modulated data according to a preset modulation format, wherein the to-be-modulated data comprises a plurality of first modulation units, and each first modulation unit comprises at least two bits;
   extracting bit data of each first modulation unit in the to-be-modulated data according to the position adjustment information, to obtain first bit data on an odd bit of the each first modulation unit and second bit data on an even bit of the each first modulation unit;
   performing a position adjustment on the extracted bit data according to the position adjustment information, to obtain at least two groups of transition data with a same data length as the to-be-modulated data, wherein the transition data comprises a plurality of second modulation units, each second modulation unit in the transition data comprises an extension bit and a data bit, and data on the data bit is configured to be the first bit data or the second bit data;
   determining from the modulation information a modulation parameter corresponding to the each second modulation unit according to bit data of each second modulation unit in each group of transition data; and
   arranging, according to an arrangement sequence of second modulation units in each group of transition data, modulation parameters corresponding to the second modulation units in each group of transition data, to obtain modulated data.

2. The method according to claim 1, wherein a position arrangement sequence of the first bit data in the transition data is identical to a position arrangement sequence of the first bit data in the to-be-modulated data, and a position arrangement sequence of the second bit data in the transition data is identical to a position arrangement sequence of the second bit data in the to-be-modulated data; or
   wherein a position arrangement sequence of the first bit data in the transition data is reverse to a position arrangement sequence of the first bit data in the to-be-modulated data, and a position arrangement sequence of the second bit data in the transition data is reverse to a position arrangement sequence of the second bit data in the to-be-modulated data.

3. The method according to claim 1 or 2, wherein the extension bit is located on a higher bit of the second modulation unit and the data bit is located on a lower bit of the second modulation unit.

4. The method according to claim 1 or 2, wherein acquiring the position adjustment information and the modulation information of the to-be-modulated data according to the preset modulation format comprises:
   determining the position adjustment information of the to-be-modulated data according to the preset modulation format.

5. The method according to claim 1 or 2, wherein before acquiring the position adjustment information and the modulation information of the to-be-modulated data according to the preset modulation format, the method further comprises:

   determining a parameter scaling rule according to the preset modulation format and a data length of the to-be-modulated data, wherein the parameter scaling rule is used for scaling the modulation parameter of the data bit in the second modulation unit; and
   determining the modulation information according to the parameter scaling rule.

6. A modulation apparatus, comprising a processor and a memory, wherein

the memory is configured to store computer programs; and
the processor is configured to execute the computer programs to:

acquire position adjustment information and modulation information of to-be-modulated data according to a preset modulation format, wherein the to-be-modulated data comprises a plurality of first modulation units, and each first modulation unit comprises at least two bits;
extract bit data of each first modulation unit in the to-be-modulated data according to the position adjustment information, to obtain first bit data on an odd bit of the each first modulation unit and second bit data on an even bit of the each first modulation unit;
perform a position adjustment on the extracted bit data according to the position adjustment information, to obtain at least two groups of transition data with a same data length as the to-be-modulated data, wherein the transition data comprises a plurality of second modulation units, each second modulation unit in the transition data comprises an extension bit and a data bit, and data on the data bit is configured to be the first bit data or the second bit data;
determine from the modulation information a modulation parameter corresponding to the each second modulation unit according to bit data of each second modulation unit in each group of transition data; and arrange, according to an arrangement sequence of second modulation units in each group of transition data, modulation parameters corresponding to the second modulation units in each group of transition data, to obtain modulated data.

7. The apparatus according to claim 6, wherein a position arrangement sequence of the first bit data in the transition data is identical to a position arrangement sequence of the first bit data in the to-be-modulated data, and a position arrangement sequence of the second bit data in the transition data is identical to a position arrangement sequence of the second bit data in the to-be-modulated data; or

wherein a position arrangement sequence of the first bit data in the transition data is reverse to a position arrangement sequence of the first bit data in the to-be-modulated data, and a position arrangement sequence of the second bit data in the transition data is reverse to a position arrangement sequence of the second bit data in the to-be-modulated data; or
wherein in the transition data, the extension bit is located on a higher bit of the second modulation unit and the data bit is located on a lower bit of the second modulation unit.

8. The apparatus according to claim 6 or 7, wherein the processor is further configured to execute the computer programs to:
determine the position adjustment information of the to-be-modulated data according to the preset modulation format.

9. The apparatus according to claim 6 or 7, wherein the processor is further configured to execute the computer programs to:

before acquiring the position adjustment information and the modulation information of the to-be-modulated data according to the preset modulation format, determine a parameter scaling rule according to the preset modulation format and a data length of the to-be-modulated data, wherein the parameter scaling rule is used for scaling the modulation parameter of the data bit in the second modulation unit; and
determine the modulation information according to the parameter scaling rule.

10. A computer storage medium, which is configured to store computer-executable instructions for performing the modulation method according to any one of claims 1 to 5.

**Patentansprüche**

1. Modulationsverfahren, umfassend:

Erfassen von Positionseinstellungsinformationen und Modulationsinformationen von zu modulierenden Daten gemäß einem voreingestellten Modulationsformat, wobei die zu modulierenden Daten eine Vielzahl von ersten Modulationseinheiten umfassen und jede erste Modulationseinheit mindestens zwei Bits umfasst;
Extrahieren von Bitdaten jeder ersten Modulationseinheit in den zu modulierenden Daten gemäß den Positionseinstellungsinformationen, um erste Bitdaten auf einem ungeraden Bit jeder ersten Modulationseinheit und zweite Bitdaten auf einem geraden Bit jeder ersten Modulationseinheit zu erhalten;

Durchführen einer Positionseinstellung an den extrahierten Bitdaten gemäß den Positionseinstellungsinformationen, um mindestens zwei Gruppen von Übergangsdaten mit einer gleichen Datenlänge wie die zu modulierenden Daten zu erhalten, wobei die Übergangsdaten eine Vielzahl von zweiten Modulationseinheiten umfassen, jede zweite Modulationseinheit in den Übergangsdaten ein Erweiterungsbit und ein Datenbit umfasst und Daten auf dem Datenbit als die ersten Bitdaten oder die zweiten Bitdaten konfiguriert sind;

Bestimmen aus den Modulationsinformationen einen Modulationsparameter, der jeder zweiten Modulationseinheit entspricht, gemäß Bitdaten jeder zweiten Modulationseinheit in jeder Gruppe von Übergangsdaten; und

Anordnen, gemäß einer Anordnungssequenz von zweiten Modulationseinheiten in jeder Gruppe von Übergangsdaten, von Modulationsparametern, die den zweiten Modulationseinheiten in jeder Gruppe von Übergangsdaten entsprechen, um modulierte Daten zu erhalten.

2. Verfahren nach Anspruch 1, wobei eine Positionsanordnungssequenz der ersten Bitdaten in den Übergangsdaten mit einer Positionsanordnungssequenz der ersten Bitdaten in den zu modulierenden Daten identisch ist und eine Positionsanordnungssequenz der zweiten Bitdaten in den Übergangsdaten mit einer Positionsanordnungssequenz der zweiten Bitdaten in den zu modulierenden Daten identisch ist; oder

wobei eine Positionsanordnungssequenz der ersten Bitdaten in den Übergangsdaten umgekehrt zu einer Positionsanordnungssequenz der ersten Bitdaten in den zu modulierenden Daten ist und eine Positionsanordnungssequenz der zweiten Bitdaten in den Übergangsdaten umgekehrt zu einer Positionsanordnungssequenz der zweiten Bitdaten in den zu modulierenden Daten ist.

3. Verfahren nach Anspruch 1 oder 2, wobei sich das Erweiterungsbit auf einem höheren Bit der zweiten Modulationseinheit befindet und sich das Datenbit auf einem niedrigeren Bit der zweiten Modulationseinheit befindet.

4. Verfahren nach Anspruch 1 oder 2, wobei das Erfassen der Positionseinstellungsinformationen und der Modulationsinformationen der zu modulierenden Daten gemäß dem voreingestellten Modulationsformat umfasst:

Bestimmen der Positionseinstellungsinformationen der zu modulierenden Daten gemäß dem voreingestellten Modulationsformat.

5. Verfahren nach Anspruch 1 oder 2, wobei das Verfahren vor dem Erfassen der Positionseinstellungsinformationen und der Modulationsinformationen der zu modulierenden Daten gemäß dem voreingestellten Modulationsformat ferner umfasst:

Bestimmen einer Parameterskalierungsregel gemäß dem voreingestellten Modulationsformat und einer Datenlänge der zu modulierenden Daten, wobei die Parameterskalierungsregel zum Skalieren des Modulationsparameters des Datenbits in der zweiten Modulationseinheit verwendet wird; und

Bestimmen der Modulationsinformationen gemäß der Parameterskalierungsregel.

6. Modulationsvorrichtung, umfassend einen Prozessor und einen Speicher, wobei

der Speicher konfiguriert ist, um Computerprogramme zu speichern; und

der Prozessor konfiguriert ist, um die Computerprogramme auszuführen, um:

Positionseinstellungsinformationen und Modulationsinformationen von zu modulierenden Daten gemäß einem voreingestellten Modulationsformat zu erfassen, wobei die zu modulierenden Daten eine Vielzahl von ersten Modulationseinheiten umfassen und jede erste Modulationseinheit mindestens zwei Bits umfasst;

Bitdaten jeder ersten Modulationseinheit in den zu modulierenden Daten gemäß den Positionseinstellungsinformationen zu extrahieren, um erste Bitdaten auf einem ungeraden Bit jeder ersten Modulationseinheit und zweite Bitdaten auf einem geraden Bit jeder ersten Modulationseinheit zu erhalten;

eine Positionseinstellung an den extrahierten Bitdaten gemäß den Positionseinstellungsinformationen durchzuführen, um mindestens zwei Gruppen von Übergangsdaten mit einer gleichen Datenlänge wie die zu modulierenden Daten zu erhalten, wobei die Übergangsdaten eine Vielzahl von zweiten Modulationseinheiten umfassen, jede zweite Modulationseinheit in den Übergangsdaten ein Erweiterungsbit und ein Datenbit umfasst und Daten auf dem Datenbit als die ersten Bitdaten oder die zweiten Bitdaten konfiguriert sind;

aus den Modulationsinformationen einen Modulationsparameter, der jeder zweiten Modulationseinheit entspricht, gemäß Bitdaten jeder zweiten Modulationseinheit in jeder Gruppe von Übergangsdaten zu bestimmen; und

gemäß einer Anordnungssequenz von zweiten Modulationseinheiten in jeder Gruppe von Übergangsdaten, Modulationsparameter, die den zweiten Modulationseinheiten in jeder Gruppe von Übergangsdaten entsprechen, anzuordnen, um modulierte Daten zu erhalten.

**7.** Vorrichtung nach Anspruch 6, wobei eine Positionsanordnungssequenz der ersten Bitdaten in den Übergangsdaten mit einer Positionsanordnungssequenz der ersten Bitdaten in den zu modulierenden Daten identisch ist und eine Positionsanordnungssequenz der zweiten Bitdaten in den Übergangsdaten mit einer Positionsanordnungssequenz der zweiten Bitdaten in den zu modulierenden Daten identisch ist; oder

wobei eine Positionsanordnungssequenz der ersten Bitdaten in den Übergangsdaten umgekehrt zu einer Positionsanordnungssequenz der ersten Bitdaten in den zu modulierenden Daten ist und eine Positionsanordnungssequenz der zweiten Bitdaten in den Übergangsdaten umgekehrt zu einer Positionsanordnungssequenz der zweiten Bitdaten in den zu modulierenden Daten ist; oder

wobei sich in den Übergangsdaten das Erweiterungsbit auf einem höheren Bit der zweiten Modulationseinheit befindet und sich das Datenbit auf einem niedrigeren Bit der zweiten Modulationseinheit befindet.

**8.** Vorrichtung nach Anspruch 6 oder 7, wobei der Prozessor ferner konfiguriert ist, um die Computerprogramme auszuführen, um:

die Positionseinstellungsinformationen der zu modulierenden Daten gemäß dem voreingestellten Modulationsformat zu bestimmen.

**9.** Vorrichtung nach Anspruch 6 oder 7, wobei der Prozessor ferner konfiguriert ist, um die Computerprogramme auszuführen, um:

vor dem Erfassen der Positionseinstellungsinformationen und der Modulationsinformationen der zu modulierenden Daten gemäß dem voreingestellten Modulationsformat eine Parameterskalierungsregel gemäß dem voreingestellten Modulationsformat und einer Datenlänge der zu modulierenden Daten zu bestimmen, wobei die Parameterskalierungsregel zum Skalieren des Modulationsparameters des Datenbits in der zweiten Modulationseinheit verwendet wird; und
die Modulationsinformationen gemäß der Parameterskalierungsregel zu bestimmen.

**10.** Computerspeichermedium, das konfiguriert ist, um computerausführbare Anweisungen zum Durchführen des Modulationsverfahrens nach einem der Ansprüche 1 bis 5 zu speichern.

## Revendications

**1.** Procédé de modulation, comprenant:

acquérir des informations de réglage de position et des informations de modulation de données à moduler selon un format de modulation prédéfini, dans lequel les données à moduler comprennent une pluralité de premières unités de modulation, et chaque première unité de modulation comprend au moins deux bits;
extraire des données binaires de chaque première unité de modulation dans les données à moduler selon les informations de réglage de position, pour obtenir des premières données binaires sur un bit impair de chaque première unité de modulation et des secondes données binaires sur un bit pair de chaque première unité de modulation;
réaliser un réglage de position sur les données binaires extraites selon les informations de réglage de position, pour obtenir au moins deux groupes de données de transition avec une même longueur de données que les données à moduler, dans lequel les données de transition comprennent une pluralité de secondes unités de modulation, chaque seconde unité de modulation dans les données de transition comprend un bit d'extension et un bit de données, et des données sur le bit de données sont configurées pour être les premières données binaires ou les secondes données binaires;
déterminer à partir des informations de modulation un paramètre de modulation correspondent à chaque seconde unité de modulation selon des données binaires de chaque seconde unité de modulation dans chaque groupe de données de transition; et
agencer, selon une séquence d'agencement de secondes unités de modulation dans chaque groupe de données de transition, des paramètres de modulation correspondent aux secondes unités de modulation dans chaque groupe de données de transition, pour obtenir des données modulées.

2. Procédé selon la revendication 1, dans lequel une séquence d'agencement de position des premières données binaires dans les données de transition est identique à une séquence d'agencement de position des premières données binaires dans les données à moduler, et une séquence d'agencement de position des secondes données binaires dans les données de transition est identique à une séquence d'agencement de position des secondes données binaires dans les données à moduler; ou
dans lequel une séquence d'agencement de position des premières données binaires dans les données de transition est inverse à une séquence d'agencement de position des premières données binaires dans les données à moduler, et une séquence d'agencement de position des secondes données binaires dans les données de transition est inverse à une séquence d'agencement de position des secondes données binaires dans les données à moduler.

3. Procédé selon la revendication 1 ou 2, dans lequel le bit d'extension est situé sur un bit supérieur de la seconde unité de modulation et le bit de données est situé sur un bit inférieur de la seconde unité de modulation.

4. Procédé selon la revendication 1 ou 2, dans lequel acquérir les informations de réglage de position et les informations de modulation des données à moduler selon le format de modulation prédéfini comprend:
déterminer les informations de réglage de position des données à moduler selon le format de modulation prédéfini.

5. Procédé selon la revendication 1 ou 2, dans lequel avant d'acquérir les informations de réglage de position et les informations de modulation des données à moduler selon le format de modulation prédéfini, le procédé comprend en outre:

déterminer une règle de mise à l'échelle de paramètre selon le format de modulation prédéfini et une longueur de données des données à moduler, dans lequel la règle de mise à l'échelle de paramètre est utilisée pour mettre à l'échelle le paramètre de modulation du bit de données dans la seconde unité de modulation; et
déterminer les informations de modulation selon la règle de mise à l'échelle de paramètre.

6. Appareil de modulation, comprenant un processeur et une mémoire, dans lequel

la mémoire est configurée pour stocker des programmes informatiques; et le processeur est configuré pour exécuter les programmes informatiques pour: acquérir des informations de réglage de position et des informations de modulation de données à moduler selon un format de modulation prédéfini, dans lequel les données à moduler comprennent une pluralité de premières unités de modulation, et chaque première unité de modulation comprend au moins deux bits;
extraire des données binaires de chaque première unité de modulation dans les données à moduler selon les informations de réglage de position, pour obtenir des premières données binaires sur un bit impair de chaque première unité de modulation et des secondes données binaires sur un bit pair de chaque première unité de modulation;
réaliser un réglage de position sur les données binaires extraites selon les informations de réglage de position, pour obtenir au moins deux groupes de données de transition avec une même longueur de données que les données à moduler, dans lequel les données de transition comprennent une pluralité de secondes unités de modulation, chaque seconde unité de modulation dans les données de transition comprend un bit d'extension et un bit de données, et des données sur le bit de données sont configurées pour être les premières données binaires ou les secondes données binaires;
déterminer à partir des informations de modulation un paramètre de modulation correspondent à chaque seconde unité de modulation selon des données binaires de chaque seconde unité de modulation dans chaque groupe de données de transition; et
agencer, selon une séquence d'agencement de secondes unités de modulation dans chaque groupe de données de transition, des paramètres de modulation correspondent aux secondes unités de modulation dans chaque groupe de données de transition, pour obtenir des données modulées.

7. Appareil selon la revendication 6, dans lequel une séquence d'agencement de position des premières données binaires dans les données de transition est identique à une séquence d'agencement de position des premières données binaires dans les données à moduler, et une séquence d'agencement de position des secondes données binaires dans les données de transition est identique à une séquence d'agencement de position des secondes données binaires dans les données à moduler; ou

dans lequel une séquence d'agencement de position des premières données binaires dans les données de transition est inverse à une séquence d'agencement de position des premières données binaires dans les données à moduler, et une séquence d'agencement de position des secondes données binaires dans les données de transition est inverse à une séquence d'agencement de position des secondes données binaires dans les données à moduler; ou

dans lequel dans les données de transition, le bit d'extension est situé sur un bit supérieur de la seconde unité de modulation et le bit de données est situé sur un bit inférieur de la seconde unité de modulation.

8. Appareil selon la revendication 6 ou 7, dans lequel le processeur est en outre configuré pour exécuter les programmes informatiques pour:

déterminer les informations de réglage de position des données à moduler selon le format de modulation prédéfini.

9. Appareil selon la revendication 6 ou 7, dans lequel le processeur est en outre configuré pour exécuter les programmes informatiques pour:

avant d'acquérir les informations de réglage de position et les informations de modulation des données à moduler selon le format de modulation prédéfini, déterminer une règle de mise à l'échelle de paramètre selon le format de modulation prédéfini et une longueur de données des données à moduler,

dans lequel la règle de mise à l'échelle de paramètre est utilisée pour mettre à l'échelle le paramètre de modulation du bit de données dans la seconde unité de modulation; et

déterminer les informations de modulation selon la règle de mise à l'échelle de paramètre.

10. Support de stockage informatique, qui est configuré pour stocker des instructions exécutables par ordinateur pour réaliser le procédé de modulation selon l'une quelconque des revendications 1 à 5.

Acquire position adjustment information and modulation information of to-be-modulated data — 101

Extract bit data of each first modulation unit in the to-be-modulated data according to the position adjustment information to obtain first bit data on an odd bit of each first modulation unit and second bit data on an even bit of each first modulation unit — 102

Perform a format adjustment on the extracted bit data according to the position adjustment information to obtain at least two groups of transition data with a same data length as the to-be-modulated data, where each second modulation unit in the transition data includes an extension bit and a data bit, and data on the data bit is configured to be the first bit data or the second bit data — 103

Determine from the modulation information a modulation parameter corresponding to each second modulation unit according to bit data of each second modulation unit in each group of transition data — 104

Arrange, according to an arrangement sequence of second modulation units in each group of transition data, modulation parameters corresponding to the second modulation units in each group of transition data to obtain modulated data — 105

**FIG. 1**

To-be-modulated data

{ P'0 } P'1 } P'2 } P'3 } P'4 } P'5 } P'6 } P'7 }

31 30 29 28 27 26 25 24 23 22 21 20 19 18 17 16 15 14 13 12 11 10 9 8 7 6 5 4 3 2 1 0

| 0x00001F1D | 1 | 1 | 0 | 1 | 0 | 0 | 0 | 1 | 0 | 1 | 1 | 1 | 0 | 0 | 0 | 0 | 1 | 1 | 1 | 0 | 0 | 1 | 0 | 1 | 0 | 1 | 0 | 1 | 1 | 0 | 0 | 0 |
| --- |
| 0x00001E1C |
| 0x00001B19 |
| 0x00001A18 |
| 0x00001715 |
| 0x00001614 |
| 0x00001311 |
| 0x00001210 |

| 0 | 0 | 0 | 0 | 0 | 0 | 0 | 0 | 0 | 0 | 1 | 1 | 0 | 0 | 0 | 1 | 0 | 0 | 0 | 1 | 0 | 0 | 0 | 0 | 0 | 0 | 1 | 1 | 0 | 0 | 1 | 0 |

31 30 29 28 27 26 25 24 23 22 21 20 19 18 17 16 15 14 13 12 11 10 9 8 7 6 5 4 3 2 1 0

Position adjustment information { P7 } P6 } P5 } P4 } P3 } P2 } P1 } P0 }

Transition data

To-be-modulated data

{ P'0 } P'1 } P'2 } P'3 } P'4 } P'5 } P'6 } P'7 }

31 30 29 28 27 26 25 24 23 22 21 20 19 18 17 16 15 14 13 12 11 10 9 8 7 6 5 4 3 2 1 0

| 0x00000F0D | 1 | 1 | 0 | 1 | 0 | 0 | 0 | 1 | 0 | 1 | 1 | 1 | 0 | 0 | 0 | 0 | 1 | 1 | 1 | 0 | 0 | 1 | 0 | 1 | 0 | 1 | 0 | 1 | 1 | 0 | 0 | 0 |
| --- |
| 0x00000E0C |
| 0x00000B09 |
| 0x00000A08 |
| 0x00000705 |
| 0x00000604 |
| 0x00000301 |
| 0x00000200 |

| 0 | 0 | 0 | 0 | 0 | 0 | 1 | 0 | 0 | 0 | 1 | 1 | 0 | 0 | 0 | 0 | 0 | 0 | 1 | 1 | 0 | 0 | 0 | 0 | 0 | 0 | 1 | 0 | 0 | 0 | 1 | 1 |

31 30 29 28 27 26 25 24 23 22 21 20 19 18 17 16 15 14 13 12 11 10 9 8 7 6 5 4 3 2 1 0

Position adjustment information { P15 } P14 } P13 } P12 } P11 } P10 } P9 } P8 }

Transition data

**FIG. 2**

| 0 | 0 | 0 | 0 | 0 | 0 | 0 | 0 | 0 | 0 | 1 | 1 | 0 | 0 | 0 | 1 | 0 | 0 | 0 | 0 | 1 | 0 | 0 | 0 | 0 | 0 | 0 | 0 | 1 | 1 | 0 | 0 | 1 | 0 |
|---|---|---|---|---|---|---|---|---|---|---|---|---|---|---|---|---|---|---|---|---|---|---|---|---|---|---|---|---|---|---|---|---|---|
| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | | |

{ P7 } P6 } P5 } P4 } P3 } P2 } P1 } P0 }

Transition data

WORD16 QAM16[16]

| | | | |
|---|---|---|---|
| 0001 | 0x3C76 | 0x14D1 | 0000 |
| 0011 | 0xC467 | 0xEB68 | 0010 |
| 0101 | 0x3C76 | 0x14D1 | 0100 |
| 0111 | 0xC467 | 0xEB68 | 0110 |
| 1001 | 0x3C76 | 0x14D1 | 1000 |
| 1011 | 0xC467 | 0xEB68 | 1010 |
| 1101 | 0x3C76 | 0x14D1 | 1100 |
| 1111 | 0xC467 | 0xEB68 | 1110 |

OUT1

| | | | |
|---|---|---|---|
| 0001 | QAM16[P1] | QAM16[P0] | 0000 |
| 0011 | QAM16[P3] | QAM16[P2] | 0010 |
| 0101 | QAM16[P5] | QAM16[P4] | 0100 |
| 0111 | QAM16[P7] | QAM16[P6] | 0110 |
| 1001 | | | 1000 |
| 1011 | | | 1010 |
| 1101 | | | 1100 |
| 1111 | | | 1110 |

**FIG. 3**

| 0 | 0 | 0 | 0 | 0 | 0 | 1 | 0 | 0 | 0 | 1 | 1 | 0 | 0 | 0 | 0 | 0 | 0 | 0 | 1 | 1 | 0 | 0 | 0 | 0 | 0 | 0 | 1 | 0 | 0 | 0 | 1 | 1 |
|---|---|---|---|---|---|---|---|---|---|---|---|---|---|---|---|---|---|---|---|---|---|---|---|---|---|---|---|---|---|---|---|---|
| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 | |

{ P15 } P14 } P13 } P12 } P11 } P10 } P9 } P8 }

Transition data

WORD16 QAM16[16]

| | | | |
|---|---|---|---|
| 0001 | 0x3C76 | 0x14D1 | 0000 |
| 0011 | 0xC467 | 0xEB68 | 0010 |
| 0101 | 0x3C76 | 0x14D1 | 0100 |
| 0111 | 0xC467 | 0xEB68 | 0110 |
| 1001 | 0x3C76 | 0x14D1 | 1000 |
| 1011 | 0xC467 | 0xEB68 | 1010 |
| 1101 | 0x3C76 | 0x14D1 | 1100 |
| 1111 | 0xC467 | 0xEB68 | 1110 |

OUT2

| | | | |
|---|---|---|---|
| 0001 | QAM16[P9] | QAM16[P8] | 0000 |
| 0011 | QAM16[P11] | QAM16[P10] | 0010 |
| 0101 | QAM16[P13] | QAM16[P12] | 0100 |
| 0111 | QAM16[P15] | QAM16[P14] | 0110 |
| 1001 | | | 1000 |
| 1011 | | | 1010 |
| 1101 | | | 1100 |
| 1111 | | | 1110 |

**FIG. 4**

Second determination module — 20a

Third determination module — 20b

Fourth determination module — 20c

Acquisition module — 21

Extraction module — 22

Format adjustment module — 23

First determination module — 24

Arrangement module — 25

**FIG. 5**

31

Modulation apparatus

32

**FIG. 6**

**EP 3 633 945 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012071104 A